# EUROPÄISCHE PATENTSCHRIFT

(11) **EP 3 374 674 B1**
(45) Veröffentlichungstag und Bekanntmachung des Hinweises auf die Patenterteilung: **06.11.2019**
(21) Anmeldenummer: 16793909.9
(22) Anmeldetag: 10.11.2016
(51) Int. Cl.: F16K 1/12, F16K 31/44, B65B 3/02, B29C 49/46

(54) **VORRICHTUNG ZUM GLEICHZEITIGEN FORMEN UND FÜLLEN VON BEHÄLTERN AUS VORFORMLINGEN, VENTILANORDNUNG UND VERWENDUNG EINER SOLCHEN VENTILANORDNUNG IN EINEM VERFAHREN ZUM GLEICHZEITIGEN FORMEN UND FÜLLEN VON BEHÄLTERN AUS VORFORMLINGEN**
DEVICE FOR SIMULTANEOUSLY MOLDING AND FILLING CONTAINERS FROM PREFORMS, VALVE ARRANGEMENT AND USE OF SUCH A VALVE ARRANGEMENT IN A METHOD FOR SIMULTANEOUSLY MOLDING AND FILLING CONTAINERS FROM PREFORMS
DISPOSITIF DE FORMAGE ET DE REMPLISSAGE SIMULTANÉS DE RÉCIPIENTS À PARTIR DE PRÉFORMES, SYSTÈME DE SOUPAPE ET UTILISATION DUDIT SYSTÈME DE SOUPAPE DANS UN PROCÉDÉ DE FORMAGE ET DE REMPLISSAGE SIMULTANÉS DE RÉCIPIENTS À PARTIR DE PRÉFORMES

(30) Priorität: 11.11.2015 DE 102015014462
(43) Veröffentlichungstag der Anmeldung: 19.09.2018
(73) Patentinhaber: KHS Corpoplast GmbH, 22145 Hamburg (DE)
(72) Erfinder: LITZENBERG, Michael, 21039 Börnsen (DE); LINKE, Michael, 22159 Hamburg (DE); LESINSKI, Werner, 22926 Ahrensburg (DE)
(74) Vertreter: Meissner Bolte Partnerschaft mbB
(86) Internationale Anmeldenummer: PCT/EP2016/077239
(87) Internationale Veröffentlichungsnummer: WO 2017/081134

(56) Entgegenhaltungen:
- EP-A1- 2 902 169
- DE-U1- 29 823 995
- FR-A1- 2 398 943
- FR-A1- 2 419 439
- NL-A- 6 901 050
- US-A- 3 311 342

## Beschreibung

Die vorliegende Erfindung betrifft eine Vorrichtung zum gleichzeitigen Formen und Füllen von Behältern aus Vorformlingen, eine Ventilanordnung und die Verwendung einer solchen Ventilanordnung in einem Verfahren zum gleichzeitigen Formen und Füllen von Behältern aus Vorformlingen.

Herkömmlich werden Behälter, insbesondere Flaschen, im Blasformverfahren durch ein unter Druck in einen vorgeheizten Vorformling einströmendes Formgas geformt und in einem zweiten Schritt mit einem Füllgut, insbesondere einem flüssigen Füllgut, befüllt. Zur rationelleren Herstellung sind in letzter Zeit Verfahren entwickelt worden, bei denen der vorgeheizte Vorformling nicht durch ein Druckgas sondern durch das unter Druck zugeführte flüssige Füllgut in einem Schritt geformt und gefüllt werden kann. Ein solches Verfahren ist z.B. aus der DE 10 2010 007 541 A1 bekannt.

Damit ein Vorformling in einen Behälter umgeformt werden kann, wird er thermisch konditioniert, also insbesondere erwärmt und mit einem geeigneten Temperaturprofil versehen. Dabei wird der Körper des Vorformlings z.B. auf ca. 120 °C erwärmt und formbar, während der Mündungsbereich nur deutlich niedrigere Temperaturen erreichen darf, da der Vorformling am Mündungsbereich in der Form- und Füllmaschine gehalten wird und sich unter den dort üblichen Haltekräften nicht verformen darf. Für die thermische Konditionierung verfügt eine Vorrichtung zur Herstellung von gefüllten Behältern über eine Heizstrecke, entlang der die Vorformlinge geführt und dabei mit dem gewünschten Termperaturprofil versehen werden.

Der Formvorgang muss dann sehr schnell vonstatten gehen, damit die im Vorformling gespeicherte Wärme ausreicht, um den Vorformling bis zum Abschluss des Formvorgangs plastisch verformbar zu erhalten. Bei der Formung mit flüssigem Füllgut muss dem Vorformling das für den ausgeformten Behälter erforderliche Volumen deshalb unter hohem Druck und innerhalb eines kurzen Zeitintervalls zugeführt werden. Volumenströme von bis zu 20 Liter/s und mehr bei Drücken bis zu 40 bar sind erforderlich.

Herkömmliche Ventile sind beispielsweise Kolbenventile, die coaxial durchströmt werden, und in denen ein zentrisch angeordneter Kolben axial bewegt wird, um den Ventilsitz zu verschließen oder den Ventilquerschnitt freizugeben. Auf den Kolben eines solchen Ventils wirken jedoch große Reaktionskräfte beim Öffnen und Schließen, die durch die druckbelasteten, unterschiedlich großen Steuerflächen entstehen. Es sind große Steuerkräfte erforderlich, die zu verzögerter Reaktion des Ventils und nur langsamer Öffnung oder Schließung führen können. Bei einem kombinierten Form- und Füllverfahren können damit die kurzen Füllzeiten nur mit hohem Aufwand erreicht werden. Eine Vorrichtung bzw. eine Ventilanordnung gemäß den Oberbegriffen der unabhängigen Ansprüche 1 bzw. 5 ist aus der EP2902169 bekannt.

Es ist Aufgabe der Erfindung, eine Vorrichtung zum Herstellen von gefüllten Behältern aus Vorformlingen durch unter Druck in den Vorformling eingeleitetes flüssiges Füllgut vorzuschlagen, die mit einem Füllventil versehen ist, das mit kurzen Reaktionszeiten angesteuert werden kann. Weiter ist es Aufgabe der Erfindung, eine Ventilanordnung vorzuschlagen, die auch bei Einsatz in Leitungssystemen mit hohem Druck mit geringem Kraftaufwand gesteuert werden kann und hohe Volumenströme ermöglicht.

Die erfindungsgemäße Aufgabe wird gelöst durch eine Vorrichtung gemäß Anspruch 1 zum Herstellen von gefüllten Behältern aus Vorformlingen durch unter Druck in den Vorformling eingeleitetes flüssiges Füllgut, umfassend eine Form- und Füllstation mit einer Form, in der ein Vorformling in einen gefüllten Behälter umformbar ist, und einem Form- und Füllkopf, dem durch eine Zuleitung unter Druck Füllgut zuführbar ist, und der ein Füllventil zur Steuerung der Füllgutzufuhr zum Vorformling aufweist. Die erfindungsgemäße Vorrichtung ist gekennzeichnet durch ein Füllventil, das eine Ventilanordnung aufweist, die einen ersten und einen zweiten Rohrstutzen mit gleichem Durchmesser umfasst. Die beiden Rohrstutzen sind beabstandet voneinander angeordnet. Zwischen den Rohrstutzen ist ein Ventilkörper angeordnet, dessen Durchmesser mindestens dem Durchmesser der Rohrstutzen entspricht. Die Ventilanordnung umfasst weiter eine entlang den beiden Rohrstutzen verschiebbare Hülse, die den Abstand zwischen den beiden Rohrstutzen dichtend überbrückt, wobei die Hülse einen maximalen Innendurchmesser aufweist, der größer als der maximale Durchmesser des Ventilkörpers ist. Die Hülse ist derart entlang den Rohrstutzen verschiebbar, dass sie in einer geschlossenen Position der Ventilanordnung mit einer am Ventilkörper angeordneten Dichtfläche in Berührung steht, und dass die Dichtfläche den Durchmesser der Rohrstutzen aufweist.

Die Ventilanordnung der erfindungsgemäßen Vorrichtung umfasst zwei Rohrstutzen, die zum Anschluss an ein Rohrleitungssystem dienen. Die Rohrstutzen haben beide denselben Durchmesser. Sie sind beabstandet angeordnet und werden dichtend überbrückt von einer entlang den Rohrstutzen verschiebbaren Hülse. Dabei ist es unerheblich, ob die Hülse die Rohrstutzen von außen umgreift oder innerhalb der Rohrstutzen eingesetzt ist. Die Wandstärke der Rohrstutzen wird hier als vernachlässigbar gegenüber dem Durchmesser angenommen. Sofern das nicht der Fall ist, soll als Durchmesser der Innendurchmesser herangezogen werden, wenn die Hülse innen in die Rohrstutzen eingreift und der Außendurchmessern, wenn die Hülse außen um die Rohrstutzen herumgreift.

Zwischen den Rohrstutzen ist ein Ventilkörper angeordnet, dessen größter Durchmesser mindestens dem Durchmesser der Rohrstutzen entspricht. Die Hülse weist einen maximalen Innendurchmesser auf, der größer als der maximale Durchmesser des Ventilkörpers ist, so dass zwischen dem Ventilkörper und der Hülse in einer offenen Position der Ventilanordnung ein Strömungsweg freigegeben ist.

Die Hülse ist entlang der Rohrstutzen derart verschiebbar, dass sie von einer geöffneten in eine geschlossene Position überführt werden kann, in der die Hülse mit einer Dichtfläche am Ventilkörper in Kontakt ist und den Strömungsweg unterbricht. Die Dichtfläche soll dabei so am Ventilkörper angeordnet sein, dass ihr Durchmesser dem Durchmesser der Rohrstutzen entspricht. Wird das Ventil geschlossen und die Strömung unterbrochen, steht in der Leitung nur stromaufwärts Druck an, während die Leitung stromabwärts druckfrei ist. Im Gegensatz zu herkömmlichen Ventilen übt der anstehende Druck aber keine Kraft auf die Ventilbetätigung aus, da die Flächen im Betätigungselement des Ventils - hier der Hülse - in beide Betätigungsrichtungen gleich groß sind. Das Ventil lässt sich deshalb mit minimalen Kräften betätigen.

Der Ventilkörper kann zumindest in Teilbereichen insbesondere kegel-, kegelstumpf-, halbkugel-, kugelsegment- oder kugelförmig sein.

Zwei an ihrer Basis aneindergefügte, symmetrische Kegelstümpfe oder eine Kugel als Ventilkörper erlauben eine Ventilbetätigung in beide Richtungen, so dass jeweils in der Endstellung eine Schließposition erreicht ist.

Die Hülse der erfindungsgemäßen Ventilanordnung ist vorzugsweise rotationssymmetrisch aufgebaut. Andere Formen sind aber auch möglich, insbesondere im Bereich des Strömungswegs außerhalb der Dichtflächen zwischen Ventilkörper und Hülse.

Der Ventilkörper wird vorzugsweise auf geeignete Weise mit mindestens einem der beiden Rohrstutzen verbunden, so dass die Verbindungselemente den Strömungsweg nicht erheblich einschränken oder die Strömung behindern.

Die Ventilanordnung weist in einer Vorrichtung zum Formen und Füllen von Behältern aus Vorformlingen eine Reckstange auf, die in axialer Richtung verschiebbar in der Ventilanordnung angeordnet ist und den Ventilkörper durchquert. Dadurch, dass die Ventilanordnung durch die außenliegende Hülse steuerbar ist und nicht durch eine Bewegung des Ventilkörpers, kann die Reckstange besonders einfach in die Ventilanordnung eingebracht werden. Es stören keine innenliegenden Steuerelemente für den Ventilkörper, da der Ventilkörper postionsfest im Ventil angeordnet ist.

Die erfindungsgemäße Aufgabe wird auch durch eine Ventilanordnung gemäß Anspruch 5 gelöst, die einen ersten und einen zweiten Rohrstutzen mit gleichem Durchmesser umfasst. Die beiden Rohrstutzen sind beabstandet voneinander angeordnet. Zwischen den Rohrstutzen ist ein Ventilkörper angeordnet, dessen Durchmesser mindestens dem Durchmesser der Rohrstutzen entspricht. Die Ventilanordnung umfasst weiter eine entlang den beiden Rohrstutzen verschiebbare Hülse, die den Abstand zwischen den beiden Rohrstutzen dichtend überbrückt, wobei die Hülse einen maximalen Innendurchmesser aufweist, der größer als der maximale Durchmesser des Ventilkörpers ist. Die Hülse ist derart entlang den Rohrstutzen verschiebbar, dass sie in einer geschlossenen Position der Ventilanordnung mit einer am Ventilkörper angeordneten Dichtfläche in Berührung steht, und dass die Dichtfläche den Durchmesser der Rohrstutzen aufweist.

Ein Füllventil mit den Eigenschaften der vorstehend beschriebenen Ventilanordnung ist mit geringer Kraft und mit geringen Reaktionszeiten steuerbar.

Für die Füllgutzufuhr zu einem Vorformling zur Formung und Füllung innerhalb der sehr kurzen Füllzeiten, die bei der hydraulischen Formung und gleichzeitigen Füllung von Behältern erreicht werden müssen, ist ein schneller Aufbau des vollständigen Fülldrucks und des vollständigen Volumenstroms des Füllguts erforderlich. Verzögerungen im Aufbau des Fülldrucks durch ein nur langsam öffnendes Ventil führen einerseits zu verlängerten Füllzeiten, was zu einer unerwünschten Abkühlung eines thermisch konditionierten Vorformlings führen kann, so dass der Vorformling nicht mehr ausreichend verformbar ist. Andererseits kann ein in der Anfangsphase des Form- und Füllvorgangs nicht ausreichender Volumenstrom zu unerwünschten Materialverteilungen bei der Umformung des Vorformlings in den Behälters führen.

Besonders vorteilhaft lässt sich in einer erfindungsgemäßen Vorrichtung ein Ventil einsetzen, das in jeder Endstellung eine Schließposition aufweist. Dadurch ist während eines Form- und Füllvorgangs, der typischerweise zwischen 100 und 150 ms dauert, keine Bewegungsumkehr erforderlich, um das Ventil zunächst zu öffnen und dann wieder zu schließen. Es ist lediglich eine lineare Bewegung erforderlich, die mit geringen Kräften und geringer Trägheit innerhalb der kurzen zur Verfügung stehenden Zeit erfolgen kann. Die gegenläufige Bewegung erfolgt im nächsten Form- und Füllzyklus.

Die erfindungsgemäße Vorrichtung verfügt über eine Reckstange, die durch den Ventilkörper des Ventils verläuft.

Ausführungsbeispiele der Erfindung werden im nachfolgend anhand der beigefügten Abbildungen näher erläutert, die Folgendes darstellen:
Die Figuren 1a, 1b und 1c zeigen schematisch eine Ventilanordnung mit einem scheibenförmigen Ventilkörper im Querschnitt in geöffneter und geschlossener Position;
Figur 2 zeigt schematisch eine Ventilanordnung mit einem kugelförmigen Ventilkörper im Querschnitt;
Figur 3 zeigt schematisch eine Ventilanordnung mit einem kegelstumpfförmigen Ventilkörper im Querschnitt;
Figur 4 zeigt die Anordnung aus Figur 3 mit einer zusätzlichen, den Ventilkörper durchquerenden Reckstange;

Die Figuren 5a bis 5c zeigen schematisch eine Vorrichtung zum Herstellen von gefüllten Behältern aus Vorformlingen durch unter Druck in den Vorformling eingeleitetes flüssiges Füllgut, die mit einem erfindungsgemäßen Ventil ausgerüstet ist, in verschiedenen Phasen des Form- und Füllvorgangs.

Es versteht sich für den Fachmann von selbst, dass die hier dargestellten Zeichnungen lediglich zur Veranschaulichung des Prinzips der Erfindung dienen sollen und nur schematisch und nicht maßstabsgerecht wiedergegeben sind. Insbesondere dienen die dargestellten Abmessungen und Größenverhältnisse der Elemente untereinander nur der Veranschaulichung. Die tatsächlichen Abmessungen und Größenverhältnisse kann der Fachmann frei aufgrund seiner Fachkenntnisse bestimmen. Darüber hinaus sind nur die für das Verständnis der Erfindung erforderlichen Komponenten dargestellt. Reale Vorrichtungen können weitere Komponenten aufweisen.

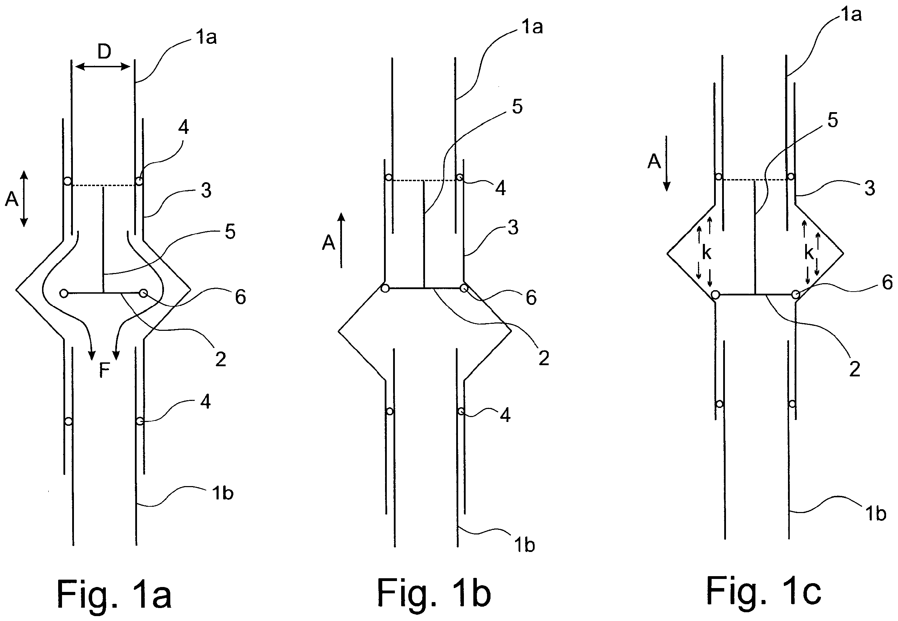

Figur 1a zeigt eine Ventilanordnung im Querschnitt, die einen ersten Rohrstutzen 1a und einen zweiten Rohrstutzen 1b umfasst. Die beiden Rohrstutzen 1a, 1b sind beabstandet voneinander angeordnet und haben denselben Durchmesser D. Eine Hülse 3 überbrückt den Abstand zwischen den beiden Rohrstutzen und ist in Richtung des Pfeiles A verschiebbar. Die Hülse ist gegenüber den Rohrstutzen durch die Dichtungen 4 abgedichtet.

Ein scheibenförmiger Ventilkörper 2 befindet sich im Abstand zwischen den beiden Rohrstutzen 1a, 1b und ist über ein geeignetes Halteelement 5 mit dem ersten Rohrstutzen 1a verbunden, so dass das Halteelement die Strömung in der Ventilanordnung nicht wesentlich behindert.

Der Ventilkörper 2 verfügt an seinem Rand über eine Dichtfläche 6, die zumindest annähernd den Durchmesser der Rohrstutzen 1a, 1b aufweist.

Der maximale Innendurchmesser der Hülse 3 ist größer als der maximale Durchmesser des Ventilkörpers 2, so dass in der dargestellten geöffneten Position ein Flüssigkeitsstrom in Richtung der Pfeile F um den Ventilkörper 2 herumfließen kann.

In Figur 1b ist das Ventil aus Figur 1a in der geschlossenen Position dargestellt. Die Hülse 3 ist dabei nach unten verschoben. Dabei gerät eine Fläche der Hülse 3 in Anlage mit der Dichtfläche 6 am Ventilkörper 2, so dass der Flüssigkeitsstrom durch das Ventil unterbrochen wird. Die in der Leitung geführte Flüssigkeit steht im Ventil an. Der zweite Rohrstutzen 1b ist flüssigkeits- und druckfrei. Durch den Druck im ersten Rohrstutzen 1a und in einem Teil der Hülse 3 werden keine Kräfte in der Betätigungsrichtung A der Hülse 3 ausgeübt, so dass die Hülse 3 annähernd kraftfrei verschoben und das Ventil so gesteuert werden kann.

In Figur 1c ist das Ventil aus den Figuren 1a und 1b nochmals in geschlossener Position dargestellt. Die Hülse 3 ist hier in der oberen Schließstellung. Durch den symmetrischen Aufbau sowohl der Hülse 3 als auch des Ventilkörpers 2 schließt das Ventil in beiden Endstellungen, so dass es verschiedene Möglichkeiten der Anbringung von Steuerorganen gibt, je nach Umgebung der Einbauposition. In dieser Schließstellung steht Flüssigkeit unter Druck in großen Bereichen der Hülse. Die vom Druck auf die Hülse 3 ausgeübten Kräfte in Richtung der Betätigungsrichtung A der Hülse 3 heben sich aber wegen der Geometrie der Flächen gegenseitig auf, da die Dichtfläche 6 fluchtend mit den Dichtungen 4 zwischen Rohrstutzen 1a, 1b und Hülse 3 angeordnet ist. Die auf die Wände wirkenden Kraftkomponenten K heben sich dabei gegenseitig auf.

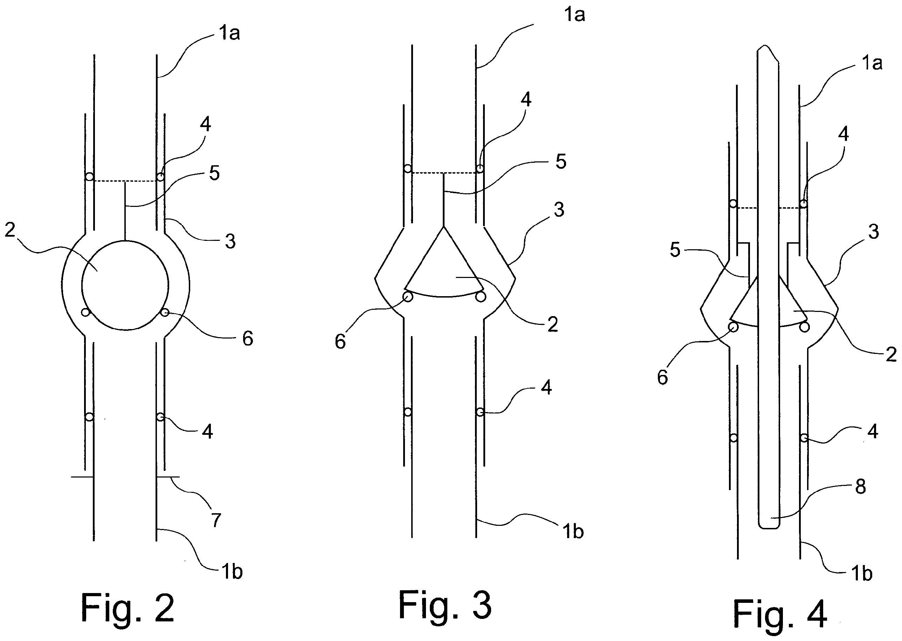

Figur 2 zeigt eine Ventilanordnung, die wie die in den Figuren 1a bis 1c dargestellte Ventilanordnung funktioniert, in der geöffneten Position. Der Ventilkörper 2 ist jedoch eine Kugel, die die Strömung in der Ventilanordnung im Vergleich zu der in Figur 1 dargestellten Platte verbessert. Der Maximaldurchmesser der Kugel ist größer als der Durchmesser der Rohrstutzen 1a, 1b. Die Hülse 3 ist entsprechend an die Kugelform angepasst, um eine Dichtfläche 6 zu erzeugen, die dem Durchmesser der Rohrstutzen entspricht. Der Verschiebeweg der Hülse ist durch einen Anschlag 7 derart begrenzt, dass sie nur von der dargestellten geöffneten Position in eine geschlossene Position überführt werden kann.

Figur 3 zeigt eine Ventilanordnung wie in Figur 2 dargestellt, aber mit einem kegestumpfförmigen Ventilkörper 2, der im seinem Bereich stromabwärts leicht gerundet ausläuft. Dadurch soll eine möglichst turbulenzarme Strömung erreicht werden. Die Funktionsweise ist davon unverändert wie vorstehend beschrieben.

Figur 4 zeigt die Ventilanordnung aus Figur 3 mit einer zusätzlich im Ventilkörper geführten Reckstange, die im Ventilkörper 2 vertikal verschiebbar ist. Das Ventil ist damit zur Verwendung in einer Anlage zum Herstellen von gefüllten Behältern aus Vorformlingen durch Einleiten des Füllguts in den Vorformling unter hohem Druck geeignet. Der Vorformling muss dabei insbesondere am Anfang der Formphase in axialer Richtung gestreckt werden. Bei herkömmlichen Ventilen mit beweglichem Kolben im Ventil ist dies teilweise schwierig umsetzbar. Die erfindungsgemäße Ventilanordnung eröffnet hier weite Möglichkeiten.

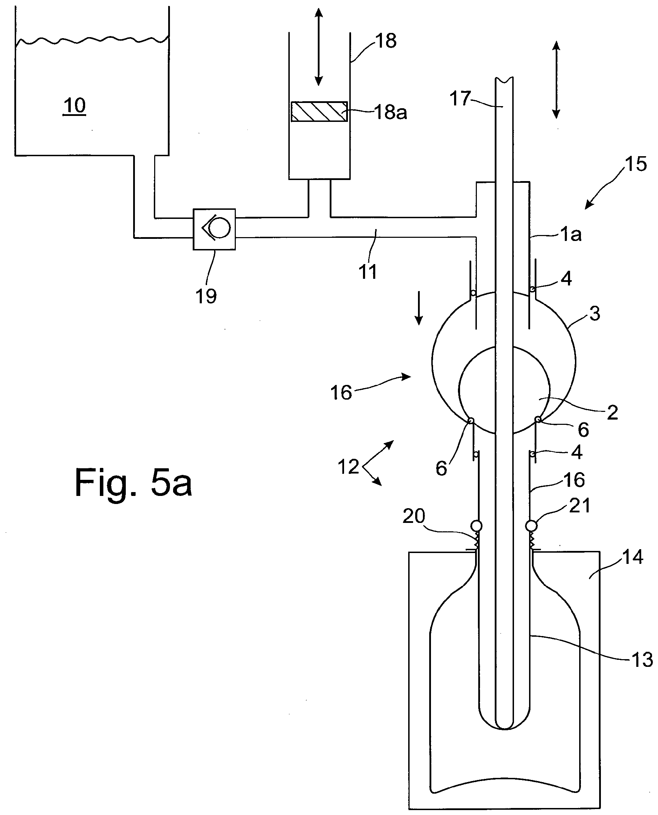

Figur 5a zeigt schematisch eine Vorrichtung zum Herstellen von gefüllten Behältern aus Vorformlingen durch unter Druck in den Vorformling eingeleitetes flüssiges Füllgut, die mit einem erfindungsgemäßen Ventil ausgerüstet ist.

Die Vorrichtung umfasst ein Füllgutreservoir 10, von dem das Füllgut durch eine Zuführleitung 11 einer Form- und Füllstation 12 zugeführt werden kann. Dort befindet sich der Vorformling 13 in einer Form 14. Der Vorformling wurde vorher entlang einer hier nicht dargestellten Heizstrecke thermisch konditioniert, so dass er plastisch verformbar ist.

Die Form- und Füllstation umfasst weiter einen Form- und Füllkopf 15 mit einem Füllventil 16 sowie einer Reckstange 17, mit der der Vorformling bzw. der sich ausbildende Behälter in axialer Richtung gestreckt und geführt werden kann.

Das aus dem Reservoir 10 zugeführte Füllgut wird in der Zuführleitung 11 unter Druck gesetzt, wofür geeignete Mittel, wie die hier dargestellte Kolbenpumpe 18 oder jede andere geeignete Pumpe verwendet werden können. Das Reservoir 10 wird über ein Rückschlagventil 19 gegen den Druck innerhalb der Zuführleitung 11 abgeschlossen.

Für die gleichzeitige Formung und Füllung eines Behältes wird in der Zuführleitung 11 der erforderliche Form- und Fülldruck von ca. 38 bar aufgebaut. Hierfür wird in die Kolbenpumpe 18 die erforderliche Füllgutmenge aufgezogen und anschließend durch den Kolben 18a der gewünschte Druck aufgebaut. Das Form- und Füllventil 16 ist dabei zunächst geschlossen, so dass kein Füllgut austreten und der Druck vollständig aufgebaut werden kann.

Das Form- und Füllventil 16 ist ein Ventil wie vorstehend beschrieben. Es verfügt über einen Ventilkörper 2, der zwischen zwei Rohrstutzen 1a, 1b angeordnet ist. Die beiden Rohrstutzen sind durch die Dichtungen 4 dichtend durch den Rohrstutzen 3 überbrückt. In der dargestellten Position befindet sich der Rohrstutzen 3 in Anlage mit der Dichtfläche 6 des Ventilkörpers, so dass das Ventil verschlossen ist.

Der Form- und Füllkopf 15 wird dann dichtend auf die Mündung 20 des Vorformlings 13 aufgesetzt, wofür eine Dichtung 21 am Form- und Füllkopf vorgesehen ist. Die Reckstange 17, die den Ventilkörper 2 durchquert, wird nach unten bis in den Boden des Vorformlings 13 gefahren.

Der gesamte Form- und Füllvorgang darf nur ca. 100 bis 150 ms dauern, damit die Temperatur des thermisch konditionierten Vorformlings 13 noch ausreicht, um eine plastische Verformung zu ermöglichen. Der Volumenstrom des Füllguts muss entsprechend hoch sein. Es ist deshalb erforderlich, das Füllventil 16 ausreichend schnell zu öffnen und auch wieder zu verschließen.

Mit dem erfindungsgemäßen Ventil geht dies ohne großen Kraftaufwand durch Verschiebung der Hülse 3 nach unten.

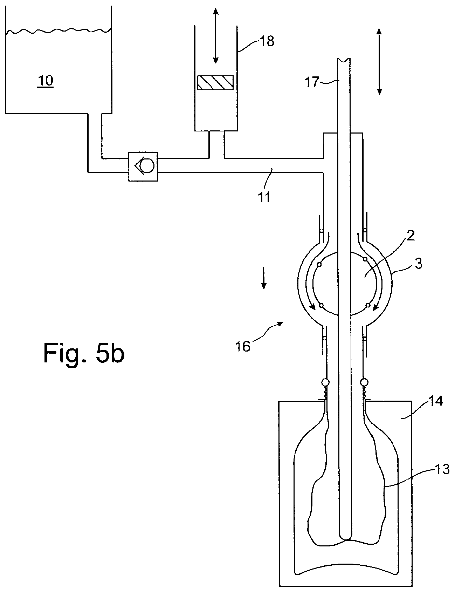

In Figur 5b ist die Vorrichtung mitten im Form- und Füllprozess dargestellt. Die Hülse 3 des Füllventils 16 ist nach unten in einen mittlere Position verschoben, so dass der Füllgutfluss um den Ventilkörper 2 herum ermöglicht wird. Die Hülse 3 kann, wie oben ausführlich erläutert, annähernd kraftlos verschoben werden, wodurch der maximale Ventilquerschnitt schnell freigegeben werden und das Füllgut unter dem gewünschten Druck und mit hoher Durchflussrate dem Vorformling 13, der in den Behälter umgeformt wird, zugeführt werden kann. Die Reckstange 17 streckt den Vorformling 13 dabei zu Beginn des Form- und Füllvorgangs und führt den Boden des Vorformlings anschließend, damit die Behälterformung gleichmäßig erfolgen und der Boden des sich bildenden Behälters nicht seitlich ausweichen kann.

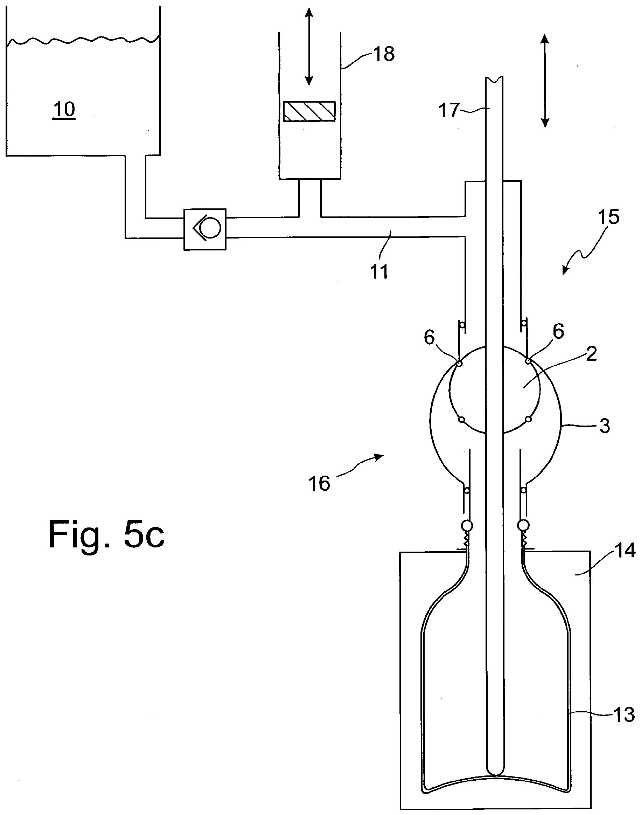

Figur 5c zeigt die Vorrichtung aus den Abbildungen 5a und 5b nach Abschluss des Form- und Füllvorgangs. Der Behälter 13 ist vollständig gefüllt und ausgeformt und liegt an der Wand der Form 14 an. Die Hülse 3 des Füllventils 16 ist ganz nach unten verschoben, wo sich wiederum eine Schließposition des Ventils befindet und kein Füllgut mehr zugeführt wird. Der Behälter kann somit vom Form- und Füllkopf 15 getrennt und weiterbearbeitet werden, insbesondere durch Verschließen, Etikettieren etc.

Für den nächsten Form- und Füllvorgang kann die Kolbenpumpe 18 erneut Füllgut aus dem Reservoir 10 ansaugen und innerhalb der Zuführleitung 11 unter Druck setzen. Der Form- und Füllvorgang erfolgt dann erneut in der oben beschriebenen Weise, wobei die Hülse 3 des Form- und Füllventils 16 in diesem Zyklus nach oben bewegt wird, um wieder in der Ausgangsposition der Figur 5a anzukommen.

Der Form- und Füllvorgang lässt sich mit dem beschriebenen Ventil besonders effizient steuern, da das Ventil sich praktisch kraftfrei öffnen und schließen lässt. Außerdem muss die Hülse 3 pro Form- und Füllvorgang nur eine lineare Bewegung vollziehen. Eine Umkehr der Bewegungsrichtung, die mit einer gewissen Trägheit verbunden wäre, ist nicht erforderlich. Das Ventil kann in der erforderlichen kurzen Füllzeit schnell voll geöffnet und wieder geschlossen werden, so dass der erforderliche Volumenstrom annähernd sofort erreicht werden kann.

## Patentansprüche

1. Vorrichtung zum Herstellen von gefüllten Behältern aus Vorformlingen (13) durch unter Druck in den Vorformling (13) eingeleitetes flüssiges Füllgut, umfassend eine Form- und Füllstation (12) mit einer Form (14), in der ein Vorformling (13) in einen gefüllten Behälter umformbar ist, und einem Form- und Füllkopf (15), dem durch eine Zuleitung (11) unter Druck Füllgut zuführbar ist, und der ein Füllventil (16) zur Steuerung der Füllgutzufuhr zum Vorformling (13) aufweist, wobei das Füllventil (16) eine Ventilanordnung mit einem Ventilkörper (2) aufweist, und wobei der Form- und Füllkopf (15) eine Reckstange (8) umfasst, die den Ventilkörper (2) der Ventilanordnung durchquert, **dadurch gekennzeichnet, dass** die Ventilanordnung folgendes umfasst:
einen ersten und einen zweiten Rohrstutzen (1a, 1b) mit im Wesentlichen gleichem Durchmesser (D), die beabstandet voneinander angeordnet sind,
wobei der Ventilkörper (2) zwischen den Rohrstutzen (1a, 1b) angeordnet ist und dessen größter Durchmesser mindestens dem Durchmesser der Rohrstutzen (1a, 1b) entspricht,
sowie eine entlang beider Rohrstutzen (1a, 1b) verschiebbaren Hülse (3), die den Abstand zwischen den beiden Rohrstutzen (1a, 1b) dichtend überbrückt,
wobei die Hülse (3) einen maximalen Innendurchmesser aufweist, der größer als der maximale Durchmesser des Ventilkörpers (2) ist,
und die Hülse (3) derart entlang der Rohrstutzen (1a, 1b) verschiebbar ist, dass sie in einer geschlossenen Position der Ventilanordnung mit einer am Ventilkörper (2) angeordneten Dichtfläche (6) in Berührung steht,
und die Dichtfläche (6) im Wesentlichen den Durchmesser (D) der Rohrstutzen (1a, 1b) aufweist.

2. Vorrichtung nach Anspruch 1, **dadurch gekennzeichnet, dass** der Ventilkörper (2) der Ventilanordnung zumindest in Teilbereichen annähernd eine Kegelform, eine Kegelstumpfform, eine Halbkugelform, eine Kugelsegmentform oder eine Kugelform aufweist.

3. Vorrichtung nach Anspruch 1 oder 2, **dadurch gekennzeichnet, dass** die Hülse (3) der Ventilanordnung rotationssymmetrisch aufgebaut ist.

4. Vorrichtung nach einem der Ansprüche 1 bis 3, **dadurch gekennzeichnet, dass** der Ventilkörper (2) der Ventilanordnung zumindest an einem der beiden Rohrstutzen (1a, 1b) befestigt ist.

5. Ventilanordnung mit einem Ventilkörper (2), wobei der Ventilkörper (2) eine Durchquerungsöffnung aufweist, wobei diese Durchquerungsöffnung in einem Einbauzustand der Ventilanordnung in einer Vorrichtung nach einem der Ansprüche 1 bis 4 von einer Reckstange (8) durchquerbar ist, **dadurch gekennzeichnet, dass** die Ventilanordnung folgendes umfasst:
einen ersten und einen zweiten Rohrstutzen (1a, 1b) mit im Wesentlichen gleichem Durchmesser (D), die beabstandet voneinander angeordnet sind,
wobei der Ventilkörper (2) zwischen den Rohrstutzen (1a, 1b) angeordnet ist und dessen größter Durchmesser mindestens dem Durchmesser der Rohrstutzen (1a, 1b) entspricht,
sowie eine entlang beider Rohrstutzen (1a, 1b) verschiebbaren Hülse (3), die den Abstand zwischen den beiden Rohrstutzen (1a, 1b) dichtend überbrückt,
wobei die Hülse (3) einen maximalen Innendurchmesser aufweist, der größer als der maximale Durchmesser des Ventilkörpers (2) ist,
wobei die Hülse (3) derart entlang der Rohrstutzen (1a, 1b) verschiebbar ist, dass sie in einer geschlossenen Position der Ventilanordnung mit einer am Ventilkörper (2) angeordneten Dichtfläche (6) in Berührung steht,
und dass die Dichtfläche (6) im Wesentlichen den Durchmesser (D) der Rohrstutzen (1a, 1b) aufweist.

6. Ventilanordnung nach Anspruch 5, **dadurch gekennzeichnet, dass** der Ventilkörper (2) zumindest in Teilbereichen annähernd eine Kegelform, eine Kegelstumpfform, eine Halbkugelform, eine Kugelsegmentform oder eine Kugelform aufweist.

7. Ventilanordnung nach Anspruch 5 oder 6, **dadurch gekennzeichnet, dass** die Hülse (3) rotationssymmetrisch aufgebaut ist.

8. Vorrichtung nach einem der Ansprüche 5 bis 7, **dadurch gekennzeichnet, dass** der Ventilkörper (2) zumindest an einem der beiden Rohrstutzen (1a, 1b) befestigt ist.

9. Verwendung einer Ventilanordnung nach einem der Ansprüche 5 bis 8 in einem Verfahren zum Formen und Füllen von Behältern aus Vorformlingen durch unter Druck in den Vorformling eingeleitetes flüssiges Füllgut.

## Claims

1. Device for producing filled containers from preforms (13) using liquid filling material introduced into the preform (13) under pressure, comprising a moulding and filling station (12) with a mould (14), in which a preform (13) can be moulded into a filled container, and a moulding and filling head (15), which can be supplied with filling material under pressure via a supply line (11), and which includes a filling valve (16) for controlling the supply of filling material to the preform (13), wherein
the filling valve (16) includes a valve arrangement with a valve body (2), and wherein the moulding and filling head (15) comprises a horizontal bar (8), which passes through the valve body (2) of the valve arrangement,
**characterised in that**
- the valve arrangement comprises the following: a first and a second pipe socket (1a, 1b) with substantially the same diameter (D), which are arranged at a distance from one another, wherein the valve body (2) is arranged between the pipe sockets (1a, 1b) and its biggest diameter at least matches the diameter of the pipe sockets (1a, 1b),
- as well as a sleeve (3) slidably movable along both pipe sockets (1a, 1b), which bridges the gap between the two pipe sockets (1a, 1b) in a sealing manner, wherein the sleeve (3) has a maximum inside diameter which is bigger than the maximum diameter of the valve body (2),
- and the sleeve (3) is slidable along the pipe sockets (1a, 1b) in such a way that it is in contact with a sealing surface (6) arranged at the valve body (2) in a closed position of the valve arrangement,
- and the sealing surface (6) essentially has the diameter (D) of the pipe sockets (1a, 1b).

2. Device according to claim 1, **characterised in that** at least in some regions, the valve body (2) of the valve arrangement approximately has a conical shape, a frustoconical shape, a hemispherical shape, a spherical segment shape or a spherical shape.

3. Device according to claim 1 or 2, **characterised in that** the sleeve (3) of the valve arrangement is constructed to be rotationally symmetrical.

4. Device according to anyone of the claims 1 through 3, **characterised in that** the valve body (2) of the valve arrangement is attached to at least one of the two pipe sockets (1a, 1b).

5. Valve arrangement with a valve body (2), wherein the valve body (2) includes a sleeve hole, wherein a horizontal bar (8) can pass through this sleeve hole in an installed state of the valve arrangement in a device according to anyone of the claims 1 through 4, **characterised in that** the valve arrangement comprises the following: a first and a second pipe socket (1a, 1b) with substantially the same diameter (D), which are arranged at a distance from one another, wherein the valve body (2) is arranged between the pipe sockets (1a, 1b) and its biggest diameter at least matches the diameter of the pipe sockets (1a, 1b),
as well as a sleeve (3) slidably movable along both pipe sockets (1a, 1b), which bridges the gap between the two pipe sockets (1a, 1b) in a sealing manner, wherein the sleeve (3) has a maximum inside diameter which is bigger than the maximum diameter of the valve body (2),
wherein the sleeve (3) is slidable along the pipe sockets (1a, 1b) in such a way that it is in contact with a sealing surface (6) arranged at the valve body (2) in a closed position of the valve arrangement,
and the sealing surface (6) essentially has the diameter (D) of the pipe sockets (1a, 1b).

6. Valve arrangement according to claim 5, **characterised in that** at least in some regions, the valve body (2) approximately has a conical shape, a frustoconical shape, a hemispherical shape, a spherical segment shape or a spherical shape.

7. Valve arrangement according to claim 5 or 6, **characterised in that** the sleeve (3) is constructed to be rotationally symmetrical.

8. Device according to anyone of the claims 5 through 7, **characterised in that** the valve body (2) is attached to at least one of the two pipe sockets (1a, 1b).

9. Use of a valve arrangement according to anyone of the claims 5 through 8 in a method for moulding and filling containers from preforms using liquid filling material introduced into the preform under pressure.

## Revendications

1. Dispositif de fabrication de récipients remplis à partir de préformes (13) par introduction dans la préforme (13) d'un produit de remplissage liquide sous pression comprenant une station de moulage et de remplissage (12) avec un moule (14) dans lequel une préforme (13) peut être transformée en un récipient rempli, et une tête de moulage et de remplissage (15) dans laquelle un produit de remplissage sous pression peut être introduit par une conduite d'amenée (11) et qui présente une valve de remplissage (16) pour commander l'adduction de produit de remplissage dans la préforme (13), la valve de remplissage (16) présentant un dispositif de valve avec un corps de valve (2) et la tête de moulage et de remplissage (15) comprenant une barre d'étirage (8) qui traverse le corps de valve (2) du dispositif de valve, **caractérisé en ce que** le dispositif de valve comprend les éléments suivants:
une première et une seconde tubulure (1a, 1b) essentiellement de même diamètre (D), lesquelles sont agencées à une certaine distance l'une de l'autre, le corps de valve (2) étant placé entre les tubulures (1a, 1b) et son diamètre le plus grand correspondant au moins au diamètre des tubulures (1a, 1b),
ainsi qu'un manchon (3) déplaçable le long des deux tubulures (1a, 1b) qui assure un pontage étanche de l'espacement entre les deux tubulures (1a, 1b), le manchon (3) présentant un diamètre intérieur maximal supérieur au diamètre maximal du corps de valve (2), et étant déplaçable le long des deux tubulures (1a, 1b) de façon à être en contact avec une surface d'étanchéification (6) du corps de valve (2) lorsque le dispositif de valve est en une position fermée, et la surface d'étanchéification (6) ayant essentiellement le diamètre (D) des tubulure (1a, 1b).

2. Dispositif selon la revendication 1, **caractérisé en ce que** le corps de valve (2) du dispositif de valve a, partiellement au moins, une forme approximativement conique, tronconique, hémisphérique, de segment sphérique ou sphérique.

3. Dispositif selon la revendication 1 ou 2, **caractérisé en ce que** le manchon (3) du dispositif de valve est une construction à symétrie de révolution.

4. Dispositif selon l'une des revendications 1 à 3, **caractérisé en ce que** le corps de valve (2) du dispositif de valve est fixé à au moins l'une des deux tubulures (1a, 1b).

5. Dispositif de valve avec un corps de valve (2), le corps de valve (2) présentant un passage qui, dans un certain état de montage du dispositif de valve dans un dispositif selon l'une des revendications 1 à 4, peut être traversé par une barre d'étirage (8), **caractérisé en ce que** le dispositif de valve comprend les éléments suivants:
une première et une seconde tubulure (1a, 1b) essentiellement de même diamètre (D), lesquelles sont agencées à une certaine distance l'une de l'autre, le corps de valve (2) étant placé entre les tubulures (1a, 1b) et son diamètre le plus grand correspondant au moins au diamètre des tubulures (1a, 1b),
ainsi qu'un manchon (3) déplaçable le long des deux tubulures (1a, 1b) qui assure un pontage étanche de l'espacement entre les deux tubulures (1a, 1b), le manchon (3) présentant un diamètre intérieur maximal supérieur au diamètre maximal du corps de valve (2), le manchon (3) étant déplaçable le long des deux tubulures (1a, 1b) de façon à être en contact avec une surface d'étanchéification (6) du corps de valve (2) lorsque le dispositif de valve est en une position fermée, et la surface d'étanchéification (6) ayant essentiellement le diamètre (D) des tubulure (1a, 1b).

6. Dispositif de valve selon la revendication 5, **caractérisée en ce que** le corps de valve (2) a, partiellement au moins, une forme approximativement conique, tronconique, hémisphérique, de segment sphérique ou sphérique.

7. Dispositif de valve selon la revendication 5 ou 6, **caractérisé en ce que** le manchon (3) est une construction à symétrie de révolution.

8. Dispositif selon l'une des revendications 5 à 7, **caractérisé en ce que** le corps de valve (2) est fixé à au moins l'une des deux tubulures (1a, 1b).

9. Utilisation d'un dispositif de valve selon l'une des revendications 5 à 8 dans un procédé de moulage et de remplissage de récipients à partir de préformes à l'aide d'un produit de remplissage liquide introduit sous pression dans la préforme.
